# EUROPEAN PATENT SPECIFICATION

(11) **EP 2 727 801 B1**
(45) Date of publication and mention of the grant of the patent: **22.04.2020**
(21) Application number: 13004780.6
(22) Date of filing: 04.10.2013
(51) Int. Cl.: B62D 55/24

(54) **The annular inner core of rubber track, track chains and chain-driven vehicles**
Ringförmiger Innenkern einer Gummiraupenkette, Raupenketten und raupenkettengetriebene Fahrzeuge
Noyau interne annulaire de chenille en caoutchouc, chaînes de piste et véhicules à entraînement par chaîne

(30) Priority: 05.11.2012 CN 201210434169
(43) Date of publication of application: 07.05.2014
(73) Proprietor: Global Track (Yangzhou) Co., Ltd., 225127 Hanjiang Yanzhou Jiangsu (CN)
(72) Inventor: Weixing, Min, Kaleen ACT 2617 (AU)
(74) Representative: Angerhausen, Christoph

(56) References cited:
- JP-A- 2000 238 671
- JP-A- 2006 035 979
- JP-A- 2009 078 581

## Description

### The field of the production technology

This invention involves in the driving technology of the construction machinery operation, especially for the field of the production technology of rubber tracks for the construction machinery.

The invention also involves track chains and chain-driven vehicles like crawlers or the like.

### Background of technology

The rubber track is made up of the rubber, steel wires and the annular inner core. The annular inner cores are made up of a lot of iron cores, the adjacent iron cores are mutual engagement and become a chain annular inner core. The iron cores are distributed on the length direction of the rubber track and transverse parallel in the rubber track.

As is well known, the annular inner cores are the main part of a rubber track, the adjacent iron cores are mutual engagement and become a steady skeleton of a rubber track. It can protect the drive device, slave unit and the branched counterweight for the construction machinery to make the rubber track work smoothly on the walking device.

In order to reduce the production costing, people designs the same iron core for a rubber track, the structure of the adjacent iron cores is identical. This will cause the rubber track run off the rail or lateral dislocation when the rubber track works on the construction machinery. It will affect the normal working of the construction machinery.

### Content of this invention

This invention is to design an annular inner core of rubber track to make the rubber tracks work on the walking equipment stably.

This invention is including the interval first iron core and second iron core.

The first iron core is including the first interface with the driving wheels, there are the first left wing and the first right wing on the both sides of the first interface with the driving wheels. There is the first left top of the iron core between the first left wing and the first interface with the driving wheels and the first right top of the iron core between the first right wing and the first interface with the driving wheels. The first left and right tops of the iron core are doming with the same side of the first interface with the driving wheels.

The second iron core is including the second interface with the driving wheels, there are the second left wing and the second right wing on the both sides of the second interface with the driving wheels. There is the second left top of the iron core between the second left wing and the second interface with the driving wheels and the second right top of the iron core between the second right wing and the second interface with the driving wheels. The second left and right tops of the iron core are doming with the same side of the second interface with the driving wheels. Such annular inner core is known from JP 2000 238671 A. Similar devices are also known from JP 2006 035979 A and JP 2009 078381 A.

The characteristics are:
There are the first left fork-type buckles on the both sides of the first interface with the driving wheels and perpendicular to the doming direction of the first left top of the iron core.

There are the first right fork-type buckles on the both sides of the first interface with the driving wheels and perpendicular to the doming direction of the first right top of the iron core.

There are the second left pointed snaps on the both sides of the second interface with the driving wheels and perpendicular to the doming direction of the second left top of the iron core.

There are the second right pointed snaps on the both sides of the second interface with the driving wheels and perpendicular to the doming direction of the second right top of the iron core.

The first left fork-type buckle and the second pointed snap of the first iron core and the second iron core that are arranged by a certain pitch are mutual engagement. The first right fork-type and the second right pointed snap are mutual engagement.

The iron cores of this invention are mutual engagement with the symmetrical fork-type buckles and the pointed snaps, this can increase the connection stability of the annular inner core, increase the holistic strength in the rubber track. It can transfer the driving force well proportioned, steady so that it can prevent the rubber track from running off the rails or lateral dislocation. It can also avoid the wear and tear between the rubber track and the road wheels, reduce the vibration and bump of the machines, increase the comfort level of the road wheels and it is propitious to increase the service lifetime of the road wheels and the rubber tracks.

Moreover, in this invention there are the arc outer contour surfaces under the first left wing and first right wing.

There are the arc outer contour surfaces under the second left wing and the second right wing.

It can be seen from the forgoing description that the invention is a special anti detracking system in iron teeth design. This system is totally different from prior art.

One iron tooth has a recess wing and the other has embossment wing, both can overlap. We make a proedge design on iron teeth. The two ends of iron teeth are made cambered. This new technology can protect rubber track from being cut by sharp edge when rubber track is driven on hard sharp road. So there are two important points, which maybe named "interlock" and "anti-trimming".

The invention is characterized by the annular inner core of rubber track including the compartmental iron cores, the first iron core and the second iron core, the first iron core is including the first interface with the driving wheels, there are the first left wing and the first right wing on the both sides of the first interface with the driving wheels, there is the first left top of the iron core between the first left wing and the first interface with the driving wheels and the first right top of the iron core between the first right wing and the first interface with the driving wheels, the first left and right tops of the iron core are doming with the same side of the first interface with the driving wheels, the second iron core is including the second interface with the driving wheels, there are the second left wing and the second right wing on the both sides of the second interface with the driving wheels, there is the second left top of the iron core between the second left wing and the second interface with the driving wheels and the second right top of the iron core between the second right wing and the second interface with the driving wheels, the second left and right tops of the iron core are doming with the same side of the second interface with the driving wheels, characterized in that the first left fork-type buckles are on the both sides of the first interface with the driving wheels and perpendicular to the doming direction of the first left top of the iron core, there are the first right fork-type buckles on the both sides of the first interface with the driving wheels and perpendicular to the doming direction of the first right top of the iron core, there are the second left pointed snaps on the both sides of the second interface with the driving wheels and perpendicular to the doming direction of the second left top of the iron core, there are the second right pointed snaps on the both sides of the second interface with the driving wheels and perpendicular to the doming direction of the second right top of the iron core, the first left fork-type buckle and the second pointed snap of the first iron core and the second iron core that are arranged by a certain pitch are mutual engagement, the first right fork-type and the second right pointed snap are mutual engagement.

The invention is also characterized by a track chain in that the annular inner core of rubber track is that there are the arc outer contour surfaces under the first left wing and the first right wing.

The invention is also characterized by a track chain in that the annular inner core of rubber track is that there are the arc outer contour surfaces under the second left wing and the second right wing.

The track chain is characterized in that the flank angle of the projecting portions and recesses in the chain links which respectively engage with one another is acute-angled and which is not a self-locking angle.

The side faces of the projecting portions and of the two recesses of the steel chain links which lie against each one may be formed curved and roll over each other when the track chain moves.

The matrix which is made of plastic may be made of an elastomer plastic which is resistant to water, oil and petrol which are encountered in practical operation and may also be designed to be ozone-resistant and light-fast.

The matrix which is made of plastic may be made of a natural rubber (NR) or a styrene-butadiene rubber (SBR) having the required Shore hardness and resilience which is stable at a temperature of from minus 50 °C to plus 70 °C, when it is made of NR or minus 40 °C to plus 80 °C if it is made of SBR.

The track chain is characterized in that the matrix which is made of plastic is made of polyurethane plastic or polyamide plastic 4 having the required Shore hardness and resilience.

The track chain is characterized in that the matrix which is made of plastic is reinforced with wires which are made .preferably of steel and completely enclosed in plastic and are set a distance apart and extend in the direction of travel of the chain.

The matrix may also enclose the chain links which are made of steel at their sides.

The track chain is characterized in that between the projecting portions and the recesses on adjacent chain links which engage with one other a gap is disposed with which each of the teeth of any motor-driven gear wheels used on the respective track-laying vehicle engage.

The chain links which are made of steel may be provided with single-piece projecting portions disposed at their end portions and arranged at right angles to them which projecting portions engage in the plastic matrix and connect the matrix to the respective chain link in a single piece.

The chain links may be made of a steel having the following physical properties: a bending strength F ≥ 35 KN.

The chain links which are made of steel may be manufactured in a single piece by drop-forging.

The chain links made of steel may be manufactured in a single piece by the cast steel method.

The chain links which are made of steel may be provided on their side pointing towards the respective gear wheel over which they are guided, with projecting portions which are formed materially in a single piece and which are set a distance part and on each of which projecting portions offset 90 degrees and pointing in the direction of travel and incorporating recesses or projecting portions are provided.

The track chain is characterized in that the projecting portions receiving the teeth of the gear wheel between them are provided on their outer side with ribs which are formed materially in single piece and decrease in height at a constant angle to the end of the respective chain link into the free portions of the respective chain link made of steel and taper down to about the surface of the respective steel chain link. The track chain is characterized in that several, preferably two chain links which are arranged close to each other are reinforced by steel wires which are positioned side-by-side symmetrically to both sides of the chain link and which are embedded in the matrix made of an elastomere, whereby the steel wires are arranged on the outer side of the chain link which is faced to the floor and whereby the longitudinal axes of the steel wires are parallel to the movement of the track chain.

The chain link for construction of a track chain for chain-driven vehicles is characterized in that the chain link consists of a flat member which is rectangular in plan view and on which in the direction of movement of the chain projecting portions are disposed on both sides of the longer sides of the chain link each of which projecting portions incorporates open recesses or projecting portions facing in the direction of movement of the chain.

The chain link may consist of a flat element which is rectangular in plan view and on which in the direction of movement of the chain, that is, on diametrically opposed sides of the longer sides of the chain link, are disposed projecting portions each of which incorporates recesses which are open in the direction of movement of the track.

In plan view the one chain link may incorporate a rectangular element in the middle longitudinal section of which two material accumulations are provided which are set a distance apart and each of which incorporates on opposite sides and in pairs two projecting portions which project at right angles to each longer side of the respective chain link and are set a distance apart and which between them enclose a preferably trapezium-shaped space, where in plan view the projecting portions are themselves approximately trapezium-shaped, and that material accumulations are provided offset 90 degrees from these projecting portions disposed in pairs a distance apart on each longer side of the chain link each of which material accumulations consists of two parts which are in plan view approximately rectangular and point towards each other by their longer base sides and the edge portions of which are beveled.

In plan view the other chain link may be rectangular-shaped and incorporate in the middle longitudinal portion two material accumulations which are set a distance apart and which consist in plan view of two approximately trapezium-shaped portions which are formed materially in a single piece and which point towards each other and the upper edge areas of which are broken or rounded, where projecting portions offset 90 degrees from these material accumulations are provided on each longer side of the respective chain link and form a single piece with the chain link and in plan view are approximately trapezium-shaped.

The chain-driven vehicles such as construction vehicles (diggers, crawlers, bulldozers, loading vehicles, etc.), agricultural machines (seeding and harvesting machines, etc.), transport vehicles (snowmobiles, snowcats, tracklaying vehicles, etc.) with tracks are driven via gear wheels.

Examples of the invention are shown in the accompanying drawings, partly schematically, in which are:
- Fig. 1: is the structural representation of this invention;
- Fig. 2: is the structural representation of the first iron core;
- Fig. 3: is the upward view of the drawing 2;
- Fig. 4: is the structural representation of the second core;
- Fig. 5: is the upward view of drawing 4;
- Fig. 6: a track chain with one sprocket of a chain-driven vehicle in perspective view, partly broken away;

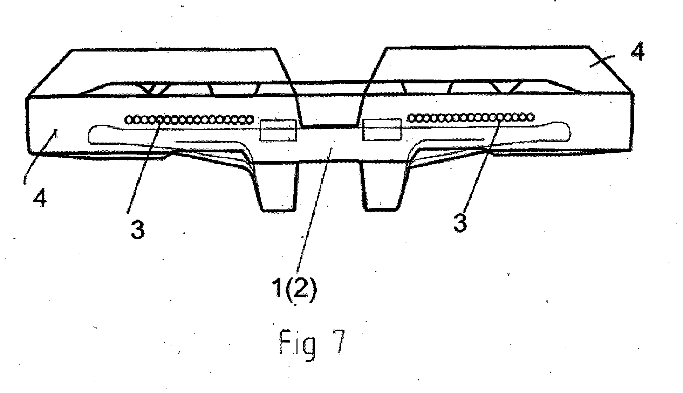

- Fig. 7: one element of the track chain, reinforced with steel wires and totally or partly embedded with rubber-like plastic;
- Fig. 8: inner steel core element, shown in Fig. 2 in perspective view;
- Fig. 9: inner steel core element, shown in Fig. 4 in perspective view;
- Fig. 10: partly side view of a crawler;
- Fig. 11: cross section according to line XI - XI of Fig. 5 and
- Fig. 12: cross section according to line XII - XII of Fig. 5.

### Mode of execution

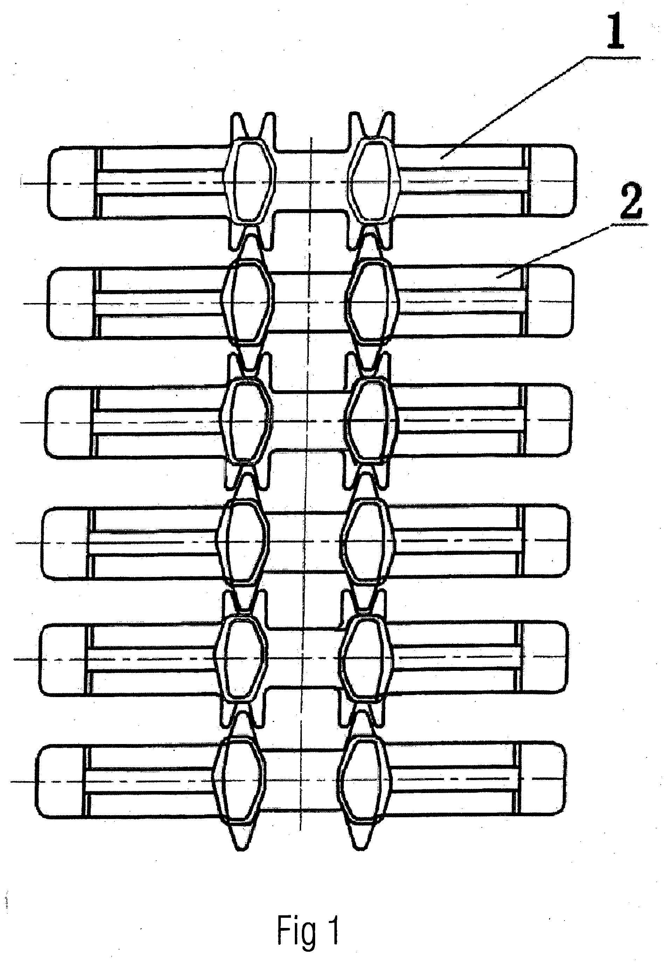

Fig. 1 shows that this annular inner core is made up by the first iron core 1 and the second iron core 2 that are mutual engagement.

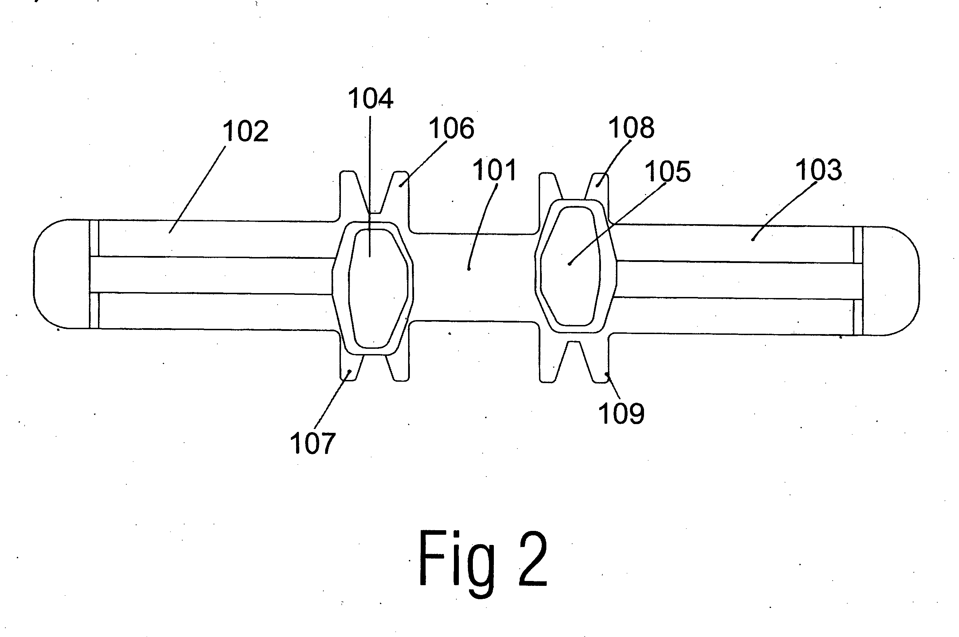

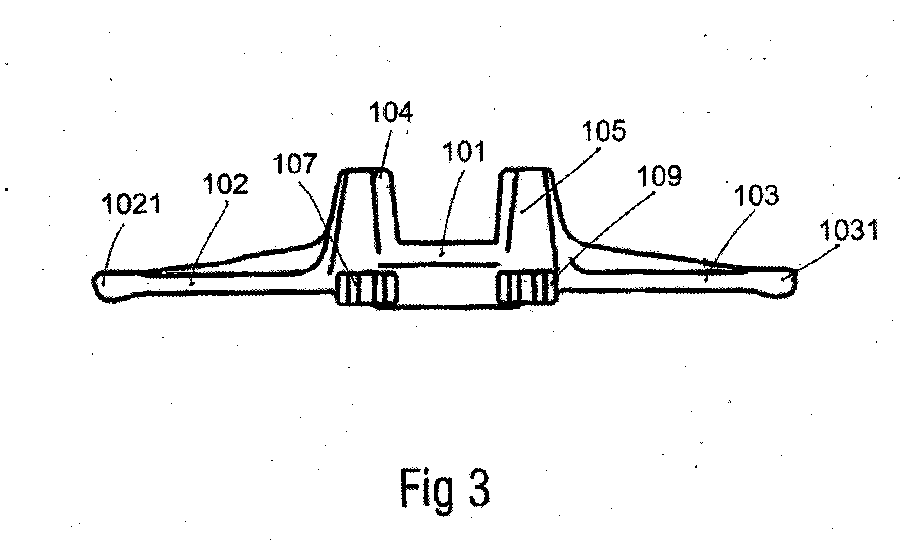

Figures 2 and 3 show that there is the first interface 101 with the driving wheels on the first iron core 1, there are the first left wing 102 and the first right wing 103 on the both sides of the first interface with the driving wheels.

There is the arc outer contour surface 1021 on the free end of the first left wing 102, the arc outer contour surface 1031 on the free end of the first right wing 103.

There is the first left top 104 of the iron core between the first interface with the driving wheels and the first left wing 102, there is the first right top 105 of the iron core between the first interface 101 with the driving wheels and the first right wing 103. The first left top 104 of the iron core and the first right top 105 of the iron core are doming on the same side of the first interface 101 with the driving wheels.

There are the first left fork-type buckles on the both sides of the first interface 101 with the driving wheels and perpendicular to the doming direction of the first left top of the iron core 106 and 107.

There are the first right fork-type buckles 108, 109 on the both sides of the first interface with the driving wheels 101 and perpendicular to the doming direction of the first right top of the iron core.

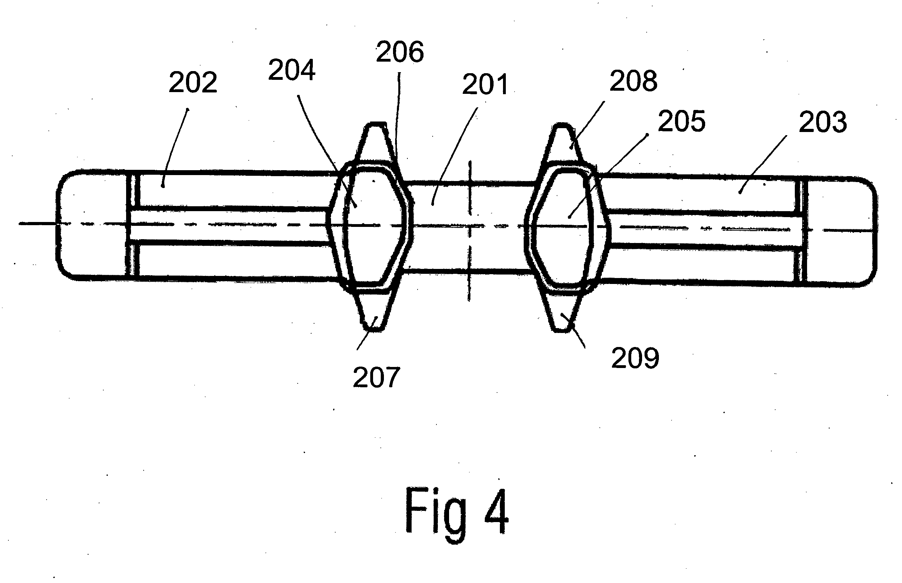

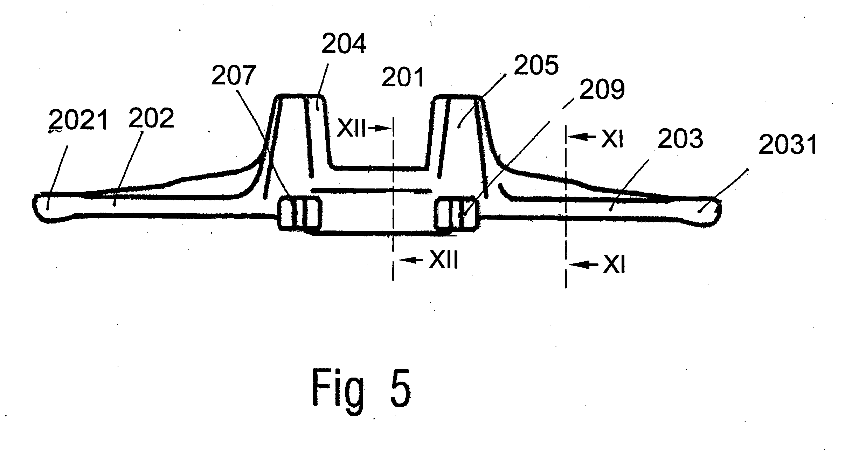

According to figures 4 and 5, there are the second interface 201 with the driving wheels on the second iron core 2, there are the second left wing 202 and the second right wing 203 on the both sides of the second interface with the driving wheels 201. There are the arc outer contour surfaces 2021 under the second left wing 202, the arc outer contour surfaces 2031 under the second right wing 203.

There is the second left top of the iron core 204 between the second interface with the driving wheels 201 and the second left wing 202, there is the second right top of the iron core 205 between the second interface with the driving wheels 201 and the second right wing 203. The second left top of the iron core 204 and the second right top of the iron core 205 are doming on the same side of the second interface with the driving wheels 201.

There are the second left pointed snaps 201 on the both sides of the second interface with the driving wheels 201 and perpendicular to the doming direction of the second left top of the iron core 206 and 207.

There are the second right pointed snaps 205 on the both sides of the second interface with the driving wheels 201 and perpendicular to the doming direction of the second right top of the iron core 208 and 209.

According to Fig. 1, the first left fork-type buckle 107 and the second pointed snap 206 of the first iron core 1 and the second iron core 2 that are arranged by a certain pitch are mutual engagement. The first right fork-type 109 and the second right pointed snap 208 are mutual engagement.

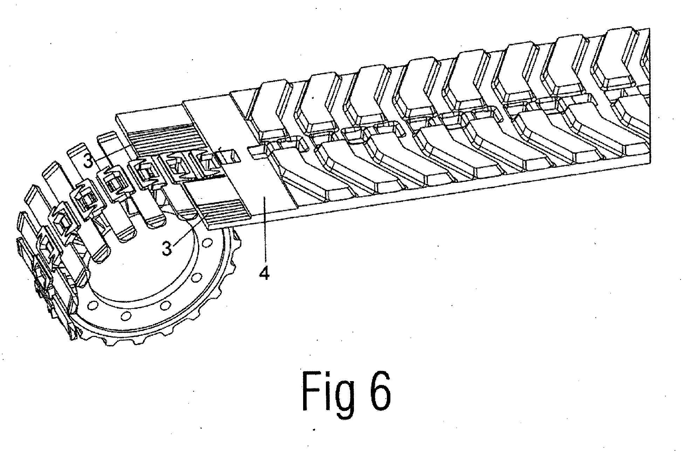

Fig. 6 shows in more detail a part of a track chain with first and second iron cores 1 and 2 totally or partly embedded in rubber like plastic. As can be seen from fig. 6, there are steel wires or cables marked with reference 3. The steel wires or cables 3 are fixed by plastic or a suitable elastomer with rubber likes characteristics. The steel wires or cables are arranged one by one according to the diameter. The first iron core and the second iron core 1 and 2 got on their left hand wing 102 and the right wing 103 iron teeth, which project right angles to the surfaces of the first and second iron cores 1 and 2. During the production the track is divided in three parts, the elastomer or plastic above, the iron teeth in the middle and the rubber below. In the molding production the plastic or elastomer could be in the iron teeth, keep the steel cables or wires stretched tight and then put the rubber or elastomer above and start vulcanization. So the method to fix the steel cables or wires in the rubber or elastomer track is to keep them stretched tight, they will be fixed in the rubber or elastomer after vulcanization. The rubber or plastic above and below is NR and SBR. Vehicles equipped with such chains may be used in farmer equipment like agricultural power machinery, farmland construction machinery, village. machinery, planting and fertilizing machinery, plant protection machinery, agro-processing-machinery, agriculture-transport-machinery, crawl tractors and so on.

The main components of rubber or plastic are
100 phr rubber elastomer (the natural rubber and the synthetic rubber)
40 - 70 phr supporting material
2 - 6 phr zinc oxide
5 - 20 phr plasticizer
1.5 - 3.0 phr sulfur
1.5 - 3.0 phr accelerant

The plastic rubber is between 0.5 and 2 mm thick.

The second left wing 202 and the second right wing 203 are embedded in the rubber and plastic. Every two iron teeth is a group. One tooth snaps in the recess of the other.

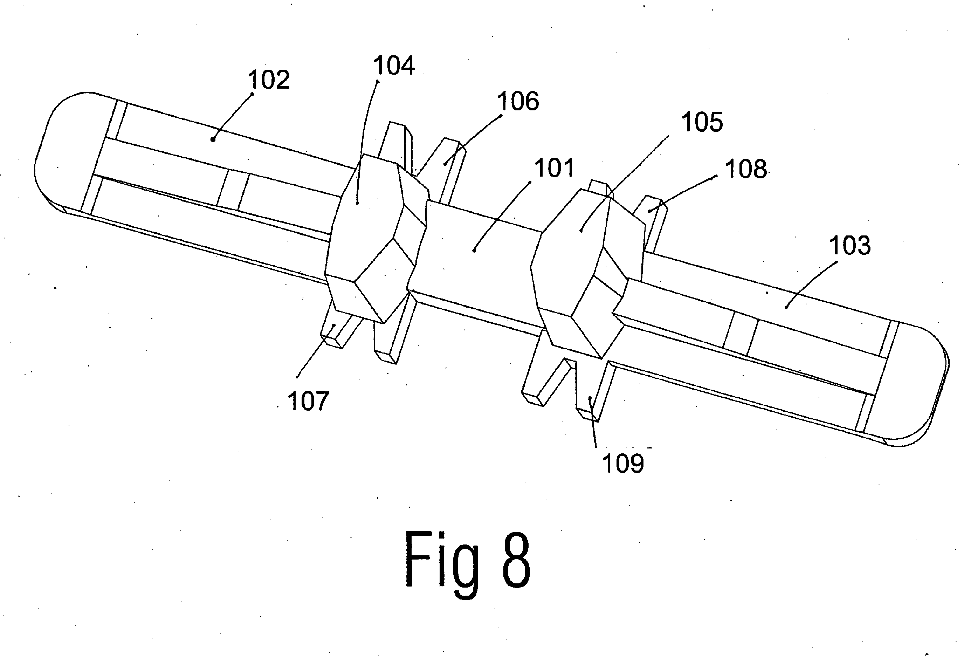

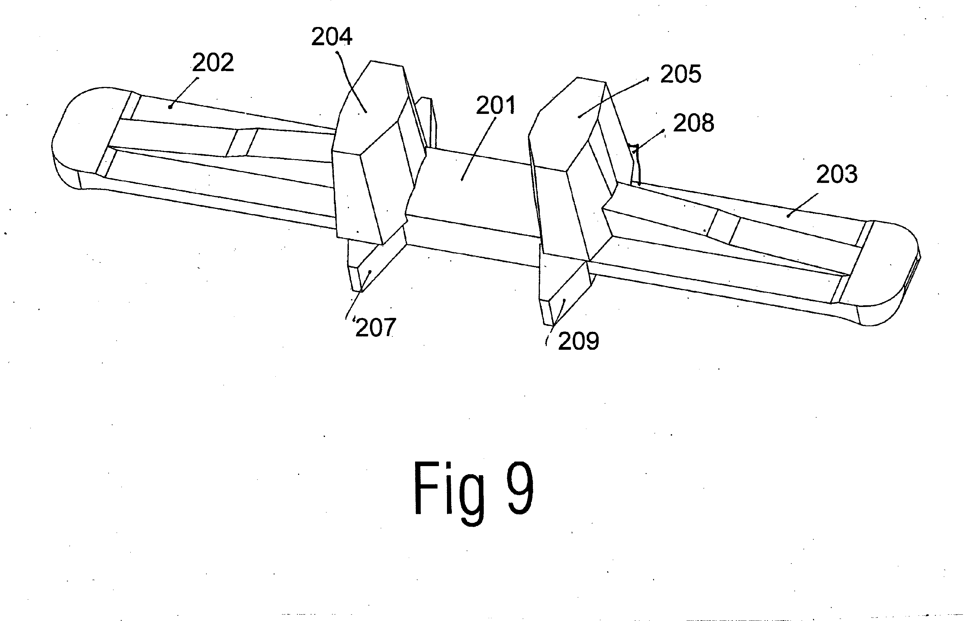

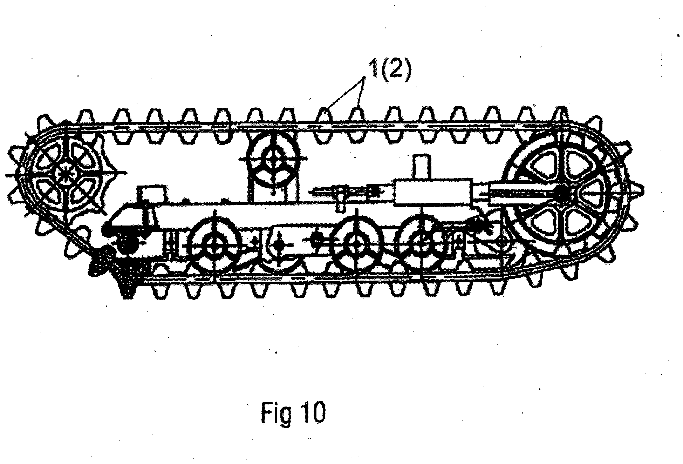

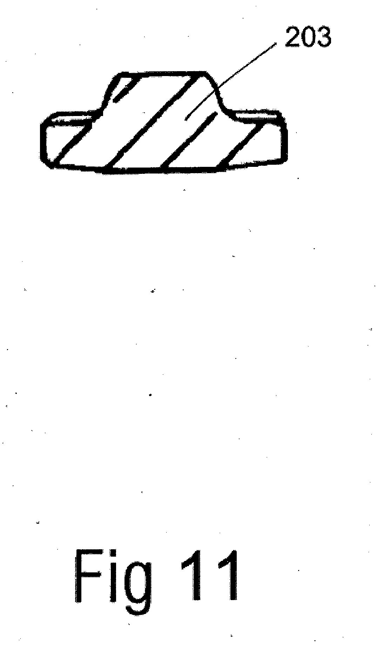

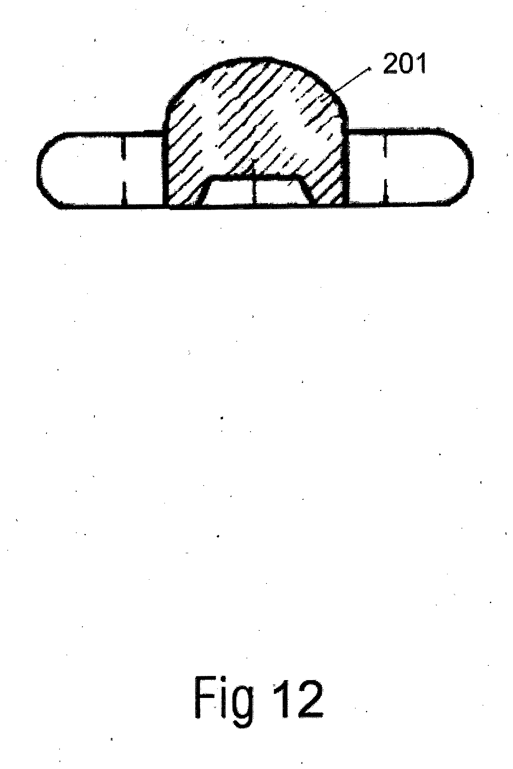

All the other figures 8, 9, 11 and 12 show in more detail the configuration of the different iron cores, whereas fig. 10 shows a track according to the invention build in in a crawler for farm working purposes.

The plastic elastomer body is marked with the reference 4.

### List of references

- 1: First iron core
- 2: Second iron core
- 101: First interface
- 102: First left wing
- 103: First right wing
- 1021: arc outer contour surface on left wing 102
- 1031: arc outer contour surface on right wing 103
- 104: First left top
- 105: First right top
- 106: First left fork-type buckles, iron core
- 107: ,, ,, ,, ,, , " "
- 108: First right fork-type buckles
- 109: ,, ,, ,, ,,
- 201: Interface, second
- 202: second left wing
- 203: second right wing
- 2021: arc contour surfaces left second wing 202
- 2031: arc contour surfaces right second wing 203
- 204: second left wing
- 205: second right wing
- 206: iron core
- 207: snaps
- 208: iron core
- 209: ,, ,,
- 3: wires, cables
- 4: rubber, plastic, elastomer

### List of literature

JP 2009-78581
JP 61-48887
JP 3033674
JP 2008-49954
JP 4160170
JP 2009-234425

## Claims

1. An annular inner core of rubber track is including compartmental iron cores (206), a first iron core (1) and a second iron core (2), the first iron core (1) is including a first interface (101) with driving wheels, there are a first left wing (102) and a first right wing (103) on both sides of the first interface (101) with the driving wheels, there is a first left top (104) of an iron core (206) between the first left wing (102) and the first interface (101) with the driving wheels and a first right top (105) of an iron core (106) between the first right wing (103) and the first interface (101) with the driving wheels, the first left and right tops of the iron core (206) are doming with the same side of the first interface (101) with the driving wheels, the second iron core (2) is including a second interface (201) with the driving wheels, there are a second left wing (202) and a second right wing (203) on both sides of the second interface (201) with the driving wheels, there is a second left top (204) of the iron core (206) between the second left wing (202) and the second interface (201) with the driving wheels and the second right top (205) of the iron core (206) between the second right wing (203) and the second interface (201) with the driving wheels, the second left and right tops (204, 205) of the iron core (206) are doming with the same side of the second interface (201) with the driving wheels,
**characterized in that**
there are first left fork-type buckles (106, 107) on the both sides of the first interface (101) with the driving wheels and perpendicular to the doming direction of the first left top (104) of the iron core (206), there are first right fork-type buckles (108, 109) on the both sides of the first interface (101) with the driving wheels, and perpendicular to the doming direction of the first right top (105) of the iron core (206), there are second left pointed snaps (207) on the both sides of the second interface (201) with the driving wheels and perpendicular to the doming direction of the second left top (204) of the iron core (206), there are second right pointed snaps (207) on the both sides of the second interface (201) with the driving wheels and perpendicular to the doming direction of the second right top (205) of the iron core (206), the first left fork-type buckle and the second pointed snap of the first iron core (1) and the second iron core (2) that are arranged by a certain pitch are in mutual engagement, the first right fork-type and the second right pointed snap are in mutual engagement.

2. The annular inner core of rubber track according to claim 1, **characterized in that** there are arc outer contour surfaces (1021, 1031) under the first left wing (102) and the first right wing (103).

3. The annular inner core of rubber track according to claim 1 or 2, **characterized in that** there are arc outer contour surfaces (2021,2031) under the second left wing (202) and the second right wing (203).

4. The annular inner core of rubber track according to one of claims 1 to 3, **characterised in that** a flank angle of projecting portions and recesses in chain links which respectively engage with one another is acute-angled and which is not a self-locking angle.

5. The annular inner core of rubber track according to one of claims 1 -to 4, **characterised in** a matrix which is made of plastic (4) or from natural rubber (NR) or from styrene-butadiene rubber (SBR) is reinforced with wires (3) which are made preferably of steel and completely enclosed in plastic (4) and are set a distance apart and extend in the direction of travel of the chain.

6. The annular inner core of rubber track according to one of claims 1 -to 5, **characterised in that** between projecting portions and recesses on adjacent chain links which engage with one another a gap is disposed with which each of the teeth of any motor-driven gear wheels used on the respective track-laying vehicle engage.

7. The annular inner core of rubber track according to one of claims 1 -to 6, **characterised in that** a projecting portions receiving the teeth of the gear wheel between them are provided on their outer side with ribs which are formed materially in single piece and decrease in height at a constant angle to the end of the respective chain link into the free portions of the respective chain link made of steel and taper down to about a surface of the respective steel chain link.

8. The annular inner core of rubber trackaccording to claims 1 -to 7 **characterised in that** several, preferably two chain links which are arranged close to each other are reinforced by steel wires (3) which are positioned side-by-side symmetrically to both sides of the chain link and which are embedded in the matrix made of an elastomere or from natural rubber (NR) or from styrene-butadiene rubber (SBR), whereby the steel wires (3) are arranged on the outer side of the chain link which is faced to the floor and whereby the longitudinal axes of the steel wires (3) are parallel to the movement of the track chain.

9. Chain link for construction of a track chain for chain-driven vehicles and including an annular inner core of rubber track in accordance with any of claims 1 to 8, **characterised in that** the chain link consists of a flat member which is rectangular in plan view and on which in the direction of movement of the chain projecting portions are disposed on both sides of the longer sides of the chain link each of which projecting portions incorporates open recesses or projecting portions facing in the direction of movement of the chain.

10. Chain-driven vehicle such as construction vehicle (digger, crawler, bulldozers, loading vehicle, etc.), agricultural machine (seeding and harvesting machine, etc.), transport vehicle (snowmobile, snowcat, tracklaying vehicle, etc.) with tracks in accordance with any of claims 1 to 9 which are driven via gear wheels.

## Patentansprüche

1. Ringförmiger Innenkern einer Gummikette enthält abteilbare Eisenkerne (206), einen ersten Eisenkern (1) und einen zweiten Eisenkern (2), wobei der erste Eisenkern (1) eine erste Schnittstelle (101) mit Antriebsrädern aufweist, es gibt einen ersten linken Flügel (102) und einen ersten rechten Flügel (103) auf beiden Seiten der ersten Schnittstelle (101) mit den Antriebsrädern, wobei es eine erste linke Oberseite (104) eines Eisenkerns (206) zwischen dem ersten linken Flügel (102) und der ersten Schnittstelle (101) mit den Antriebsrädern und eine erste rechte Oberseite (105) eines Eisenkerns (106) zwischen dem ersten rechten Flügel (103) und der ersten Schnittstelle (101) mit den Antriebsrädern gibt, wobei die ersten linken und rechten Oberseiten des Eisenkerns (206) mit der gleichen Seite der ersten Schnittstelle (101) mit den Antriebsrädern gewölbt sind, wobei der zweite Eisenkern (2) eine zweite Schnittstelle (201) zu den Antriebsrädern aufweist, wobei es einen zweiten linken Flügel (202) und einen zweiten rechten Flügel (203) auf beiden Seiten der zweiten Schnittstelle (201) zu den Antriebsrädern gibt, wobei eine zweite linke Oberseite (204) des Eisenkerns (206) zwischen dem zweiten linken Flügel (202) und der zweiten Schnittstelle (201) mit den Antriebsrädern und die zweite rechte Oberseite (205) des Eisenkerns (206) zwischen dem zweiten rechten Flügel (203) und der zweiten Schnittstelle (201) mit den Antriebsrädern vorhanden ist, wobei die zweite linke und rechte Oberseite (204, 205) des Eisenkerns (206) mit derselben Seite der zweiten Schnittstelle (201) mit den Antriebsrädern gewölbt sind,
**dadurch gekennzeichnet, dass**
es erste linke gabelartige Schnallen (106, 107) gibt auf beiden Seiten der ersten Schnittstelle (101) mit den Antriebsrädern und senkrecht zur Wölbungsrichtung der ersten linken Oberseite (104) des Eisenkerns (206), es gibt erste rechte gabelartige Schnallen (108, 109) auf beiden Seiten der ersten Schnittstelle (101) mit den Antriebsrädern, und senkrecht zur Wölbungsrichtung der ersten rechten Oberseite (105) des Eisenkerns (206) gibt es zweite linke spitze Schnapper (207) auf beiden Seiten der zweiten Schnittstelle (201) mit den Antriebsrädern und senkrecht zur Wölbungsrichtung der zweiten linken Oberseite (204) des Eisenkerns (206), es gibt zweite rechte spitze Schnapper (207) auf beiden Seiten der zweiten Schnittstelle (201) mit den Antriebsrädern und senkrecht zur Wölbungsrichtung des zweiten rechten oberen Teils (205) des Eisenkerns (206), wobei die erste linke gabelartige Schnalle und der zweite spitze Schnapper des ersten Eisenkerns (1) und des zweiten Eisenkerns (2), die in einem bestimmten Abstand angeordnet sind, stehen in gegenseitigem Eingriff und wobei der erste rechte gabelartige und der zweite rechte spitze Schnapper in gegenseitigem Eingriff stehen.

2. Ringförmiger Innenkern einer Gummikette nach Anspruch 1, **dadurch gekennzeichnet, dass** unter dem ersten linken Flügel (102) und dem ersten rechten Flügel (103) bogenförmige Außenkonturflächen (1021, 1031) vorhanden sind.

3. Ringförmiger Innenkern einer Gummikette nach Anspruch 1 oder 2, **dadurch gekennzeichnet, dass** sich unter dem zweiten linken Flügel (202) und dem zweiten rechten Flügel (203) bogenförmige Außenkonturflächen (2021, 2031) befinden.

4. Ringförmiger Innenkern einer Gummikette nach einem der Ansprüche 1 bis 3, **dadurch gekennzeichnet, dass** ein Flankenwinkel von Vorsprüngen und Ausnehmungen in Kettengliedern, die jeweils ineinander greifen, spitzwinklig ist und kein selbsthemmender Winkel ist.

5. Ringförmiger Innenkern einer Gummikette nach einem der Ansprüche 1 bis 4, **gekennzeichnet durch** eine Matrix aus Kunststoff (4) oder aus Naturkautschuk (NR) oder aus Styrol-Butadien-Kautschuk (SBR), die mit Drähten (3) verstärkt ist, die vorzugsweise aus Stahl bestehen und vollständig von Kunststoff (4) umschlossen sind und in einem Abstand zueinander angeordnet sind und sich in Laufrichtung der Kette erstrecken.

6. Ringförmiger Innenkern einer Gummikette nach einem der Ansprüche 1 bis 5, **dadurch gekennzeichnet, dass** zwischen Vorsprüngen und Ausnehmungen an benachbarten, ineinandergreifenden Kettengliedern eine Lücke angeordnet ist, in die jeweils die Zähne etwaiger am jeweiligen Kettenfahrzeug verwendeter motorisch angetriebener Zahnräder eingreifen.

7. Ringförmiger Innenkern einer Gummikette nach einem der Ansprüche 1 bis 6, **dadurch gekennzeichnet, dass** ein vorspringender Abschnitt, der die Zähne des Zahnrades zwischen sich aufnimmt, an seiner Außenseite mit Rippen versehen ist, die einstückig ausgebildet sind und unter einem konstanten Winkel zum Ende des jeweiligen Kettengliedes hin in die freien Abschnitte des jeweiligen Kettengliedes aus Stahl abfallen und sich etwa bis zu einer Fläche des jeweiligen Stahlkettengliedes verjüngen.

8. Ringförmiger Innenkern einer Gummikette nach einem der Ansprüche 1 bis 7, **dadurch gekennzeichnet, dass** mehrere, vorzugsweise zwei nahe beieinander angeordnete Kettenglieder durch Stahldrähte (3) verstärkt sind, die symmetrisch zu beiden Seiten des Kettengliedes nebeneinander angeordnet und in die Matrix aus einem Elastomer oder aus Naturkautschuk (NR) oder aus Styrol-Butadien-Kautschuk (SBR) eingebettet sind, wobei die Stahldrähte (3) auf der dem Boden zugewandten Außenseite des Kettengliedes angeordnet sind und wobei die Längsachsen der Stahldrähte (3) parallel zur Bewegung der Gleiskette verlaufen.

9. Kettenglied zum Aufbau einer Raupenkette für kettengetriebene Fahrzeuge, das einen ringförmigen inneren Kern aus einer Gummikette nach einem der Ansprüche 1 bis 8 aufweist, **dadurch gekennzeichnet, daß** das Kettenglied aus einem flachen Element besteht, das in der Draufsicht rechteckig ist und auf dem in Bewegungsrichtung der Kette vorstehende Abschnitte auf beiden Seiten der längeren Seiten des Kettengliedes angeordnet sind, wobei jeder der vorstehenden Abschnitte offene Aussparungen oder vorstehende Abschnitte aufweist, die in Bewegungsrichtung der Kette weisen.

10. Kettengetriebenes Fahrzeug wie Baufahrzeug (Bagger, Raupe, Planierraupe, Ladefahrzeug usw.), Landmaschine (Saat- und Erntemaschine usw.), Transportfahrzeug (Schneemobil, Pistenraupe, Kettenfahrzeug usw.) mit Ketten nach einem der Ansprüche 1 bis 9, die über Zahnräder angetrieben werden.

## Revendications

1. Noyau interne annulaire de chenille en caoutchouc comprenant des noyaux en fer compartimentés (206), un premier noyau en fer (1) et un second noyau en fer (2), le premier noyau en fer (1) comprend une première interface (101) avec des roues motrices, il y a une première aile gauche (102) et une première aile droite (103) des deux côtés de la première interface (101) avec les roues motrices, il y a un premier sommet gauche (104) d'un noyau en fer (206) entre la première aile gauche (102) et la première interface (101) avec les roues motrices et un premier sommet droit (105) d'un noyau en fer (106) entre la première aile droite (103) et la première interface (101) avec les roues motrices, les premiers sommets gauche et droit du noyau en fer (206) s'arrondissent avec le même côté de la première interface (101) avec les roues motrices, le second noyau en fer (2) comprend une seconde interface (201) avec les roues motrices, il y a une seconde aile gauche (202) et une seconde aile droite (203) des deux côtés de la seconde interface (201) avec les roues motrices, il y a un second sommet gauche (204) du noyau en fer (206) entre la seconde aile gauche (202) et la seconde interface (201) avec les roues motrices et le second sommet droit (205) du noyau en fer (206) entre la seconde aile droite (203) et la seconde interface (201) avec les roues motrices, les seconds sommets gauche et droit (204, 205) du noyau en fer (206) s'arrondissent avec le même côté de la seconde interface (201) avec les roues motrices,
**caractérisé en ce que** :
il y a des premières boucles gauches de type fourche (106, 107) des deux côtés de la première interface (101) avec les roues motrices et perpendiculaires à la direction de dôme du premier sommet gauche (104) du noyau en fer (206), il y a des premières boucles droites de type fourche (108, 109) des deux côtés de la première interface (101) avec les roues motrices, et perpendiculaires à la direction de dôme du premier sommet droit (105) du noyau en fer (206), il y a des seconds fermoirs pointus gauches (207) des deux côtés de la seconde interface (201) avec les roues motrices et perpendiculaires à la direction de dôme du second sommet gauche (204) du noyau en fer (206), il y a des seconds fermoirs pointus droits (207) des deux côtés de la seconde interface (201) avec les roues motrices et perpendiculaires à la direction de dôme du second sommet droit (205) du noyau en fer (206), la première boucle gauche de type fourche et le second fermoir pointu du premier noyau en fer (1) et du second noyau en fer (2) qui sont agencés selon un certain pas, sont en mise en prise mutuelle, la première boucle droite de type fourche et le second fermoir pointu droit sont en mise en prise mutuelle.

2. Noyau interne annulaire de chenille en caoutchouc selon la revendication 1, **caractérisé en ce qu'**il y a des surfaces de contour externes arquées (1021, 1031) sous la première aile gauche (102) et la première aile droite (103).

3. Noyau interne annulaire de chenille en caoutchouc selon la revendication 1 ou 2, **caractérisé en ce qu'**il y a des surfaces de contour externes arquées (2021, 2031) sous la seconde aile gauche (202) et la seconde aile droite (203).

4. Noyau interne annulaire de chenille en caoutchouc selon l'une des revendications 1 à 3, **caractérisé en ce qu'**un angle de flanc des parties en saillie et des évidements dans les maillons de chaîne qui se mettent respectivement en prise entre eux, est un angle aigu et qui n'est pas un angle autobloquant.

5. Noyau interne annulaire de chenille en caoutchouc selon l'une des revendications 1 à 4, **caractérisé en ce qu'**une matrice qui est réalisée à partir de plastique (4) ou d'un caoutchouc naturel (NR) ou à partir de caoutchouc de styrène-butadiène (SBR) est renforcée avec des fils (3) qui sont de préférence réalisés à partir d'acier et complètement enfermés dans du plastique (4) et sont placés à une distance et s'étendent dans la direction de déplacement de la chaîne.

6. Noyau interne annulaire de chenille en caoutchouc selon l'une des revendications 1 à 5, **caractérisé en ce qu'**entre les parties en saillie et les évidements sur des maillons de chaîne adjacents qui se mettent en prise entre eux, on dispose un espace avec lequel chacune des dents de l'une quelconque des roues dentées entraînées par moteur utilisées sur le véhicule à chenilles se met en prise.

7. Noyau interne annulaire de chenille en caoutchouc selon l'une des revendications 1 à 6, **caractérisé en ce que** les parties en saillie recevant les dents de la roue dentée entre elles, sont prévues, sur leur côté externe, avec des nervures qui sont formées matériellement d'un seul tenant et diminuent en hauteur à un angle constant jusqu'à l'extrémité du maillon de chaîne dans les parties libres du maillon de chaîne respectif réalisé à partir d'acier et se rétrécissent progressivement jusqu'à environ une surface du maillon de chaîne en acier respectif.

8. Noyau interne annulaire de chenille en caoutchouc selon les revendications 1 à 7, **caractérisé en ce que** plusieurs, de préférence deux maillons de chaîne qui sont agencés à proximité l'un de l'autre, sont renforcés par des fils en acier (3) qui sont positionnés côte à côte symétriquement des deux côtés du maillon de chaîne et qui sont encastrés dans la matrice réalisée avec un élastomère ou à partir de caoutchouc naturel (NR) ou à partir de caoutchouc de styrène-butadiène (SBR), moyennant quoi les fils en acier (3) sont agencés sur le côté externe du maillon de chaîne qui est orienté vers le sol et moyennant quoi les axes longitudinaux des fils en acier (3) sont parallèles au déplacement de la chaîne de chenille.

9. Maillon de chaîne pour la construction d'une chaîne de chenille pour des véhicules à chaîne et comprenant un noyau interne annulaire de chenille en caoutchouc selon l'une quelconque des revendications 1 à 8, **caractérisé en ce que** le maillon de chaîne se compose d'un élément plat qui est rectangulaire sur une vue en plan et sur lequel, dans la direction de déplacement des parties en saillie de chaîne, sont disposés des deux côtés des côtés plus longs du maillon de chaîne, dont chaque partie en saillie comprend des évidements ouverts ou des parties en saillie orientées dans la direction de déplacement de la chaîne.

10. Véhicule à chaîne tel qu'un véhicule de construction (une excavatrice, un châssis à chenilles, des bulldozers, un véhicule de chargement, etc.), une machine agricole (une machine pour ensemencer et récolter, etc.), un véhicule de transport (motoneige, dameuse, véhicule à chenilles, etc.) avec des chenilles selon l'une quelconque des revendications 1 à 9 qui sont entraînées par des roues dentées.
